(19) **Europäisches Patentamt / European Patent Office / Office européen des brevets**

(11) **EP 3 343 996 A1**

(12) **EUROPEAN PATENT APPLICATION**

(43) Date of publication:
04.07.2018 Bulletin 2018/27

(51) Int Cl.:
*H04W 72/12* (2009.01)

(21) Application number: 18150028.1

(22) Date of filing: 02.01.2018

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **30.12.2016 CN 201611258460**

(71) Applicant: **Beijing Xiaomi Mobile Software Co., Ltd.**
**Beijing 100085 (CN)**

(72) Inventor: **JIANG, Xiaowei**
**Beijing 100085 (CN)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(54) **METHOD AND APPARATUS FOR TRIGGERING REPORTING BUFFER STATUS REPORT AND USER EQUIPMENT**

(57) The disclosure relates to a method and apparatus for triggering a buffer status report (BSR), and a user equipment (800). The method includes determining (101), by a user equipment (800), a data size of a transmission to be sent by the user equipment (800) to a base station; reporting the data size to the base station; receiving (102) an allocation of an uplink resource size that is allocated by the base station to the user equipment (800) based on the data size; determining a difference value between the data size and the uplink resource size; and transmitting (103) the BSR to the base station when the difference value between the data size and the uplink resource size is less than a preset threshold value.

```
┌─────────────────────────────────────────────────────────┐
│ Acquiring a data size to be sent by a user equipment      │── 101
│ that is reported to a base station by the user equipment  │
└─────────────────────────────────────────────────────────┘
                            │
                            ▼
┌─────────────────────────────────────────────────────────┐
│ Acquiring an uplink resource size allocated by the base   │── 102
│ station to the user equipment according to the data size  │
└─────────────────────────────────────────────────────────┘
                            │
                            ▼
┌─────────────────────────────────────────────────────────┐
│ Triggering the user equipment to report the BSR to the    │── 103
│ base station, if a difference value between the data size  │
│ and the uplink resource size is less than a preset         │
│ threshold value                                            │
└─────────────────────────────────────────────────────────┘
```

Fig.1

**Description**

**TECHNICAL FIELD**

The present disclosure relates to the field of intelligent terminal equipment, and more particularly to a method and an apparatus for triggering a buffer status report (BSR), and a user equipment.

**BACKGROUND**

In Long Term Evolution (LTE), a buffer status report (BSR) sent from a user equipment (UE) to an evolved Node B (eNodeB) is employed to represent how much data needs to be sent in an uplink buffer of the user equipment, such that the eNodeB allocates uplink resource to the user equipment for the user equipment to send uplink data to the eNodeB through the uplink resource.

In related art, the user equipment sends the BSR to the eNodeB through a variety of triggering mechanisms, one of which is that the user equipment periodically sends the BSR to the eNodeB. For example, when the user equipment needs to send a large amount of data, the data continuously enters an uplink buffer of the user equipment. The user equipment may periodically send the BSR to the eNodeB, periodically informing the eNodeB that how much data needs to be sent in the uplink buffer of the user equipment.

However, in a case when the user equipment periodically sends the BSR to the eNodeB, if the user equipment sends the BSR to the eNodeB in a small period, a large network overhead will be caused. On the other hand, if the user equipment sends the BSR to the eNodeB in a large period, that is, a time interval between a previous time when the user equipment sends the BSR to the eNodeB and a next time when the user equipment sends the BSR to the eNodeB is large, it may cause the uplink resource to be used by the user terminal to send the uplink data soon after the base station allocates the uplink resource to the user equipment according to the BSR sent by the user equipment at the previous time. Since the time interval between sending the BSR at the previous time and the next time is large, the user equipment cannot acquire new uplink resource immediately after all the uplink resource allocated at the previous time is used to send the uplink data, which results in the user equipment not being able to send data in the uplink buffer to the eNodeB in time, resulting in large delay of the uplink data.

**SUMMARY**

This Summary is provided to introduce a selection of aspects of the present disclosure in a simplified form that are further described below in the Detailed Description. This Summary is not intended to identify key features or essential features of the claimed subject matter, nor is it intended to be used to limit the scope of the claimed subject matter.

Aspects of the disclosure provide a method for triggering a buffer status report (BSR). The method includes determining, by a user equipment, a data size of a transmission to be sent by the user equipment to a base station; reporting the data size to the base station; receiving an allocation of an uplink resource size that is allocated by the base station to the user equipment based on the data size; determining a difference value between the data size and the uplink resource size; and transmitting the BSR to the base station when the difference value between the data size and the uplink resource size is less than a preset threshold value.

When determining the data size of the transmission, the method includes acquiring a buffer size range indicated by a previous BSR that is transmitted to the base station by the user equipment at a previous time with respect to a current time, and using as the data size to be sent by the user equipment the minimum value or the maximum value of the buffer size range.

When determining the data size of the transmission, the method also includes acquiring an actual buffer size of an uplink buffer of the user equipment at a previous time when the user equipment reported a previous BSR to the base station with respect to a current time.

When receiving the allocation of the uplink resource size, the method includes acquiring an uplink resource size between the previous time when the user equipment reported the previous BSR to the base station and the current time.

The user equipment is triggered to transmit the BSR to the base station at the current time.

The preset threshold value is determined based on one of a different logical channel of the user equipment, a different logical channel group of the user equipment, and all logical channels of the user equipment.

Aspects of the disclosure also provide a user equipment that includes a processor and a memory for storing instructions executable by the processor. The processor is configured to determine a data size of a transmission to be sent by the user equipment to a base station; report the data size to the base station; receive an allocation of an uplink resource size that is allocated by the base station to the user equipment based on the data size; determine a difference value between the data size and the uplink resource size; and transmit a buffer status report (BSR) to the base station when the difference value between the data size and the uplink resource size is less than a preset threshold value.

Aspects of the disclosure also provide a non-transitory computer-readable storage medium having stored therein instructions that, when executed by a processor of a user equipment, cause the user equipment to determine a data size of a transmission to be sent by the user equipment to a base station; report the data size to the base station; receive an allocation of an uplink resource size that is allocated by the base station to the user equipment based on the data size; determine a difference value between the data size and the uplink resource size; and transmit a buffer status report (BSR) to the base station when the difference value between the data size and the uplink resource size is less than a preset threshold value.

By comparing a data size needed to be sent by a user equipment and an uplink resource size allocated by the base station to the user equipment according to the data size, it is judged whether or not to trigger the user equipment to report the buffer status report BSR to the base station. Specifically, if the data size to be sent by the user equipment is larger than the uplink resource size allocated by the base station to the user equipment and a difference value between the data size and the uplink resource size is less than a preset threshold value, the user equipment is triggered to report the BSR to the base station. That is, when a large amount of data needs to be sent by the user equipment, it may be judged whether or not the user equipment is triggered to report the buffer status report BSR to the base station, based on the difference value between the data size to be sent by the user equipment and the uplink resource size allocated by the base station to the user equipment. Thus, the user equipment does not need to periodically send the BSR to an eNodeB, which avoids a problem of large network overhead caused by the small period, and meanwhile avoids a problem of large delay of the uplink data due to the large period.

By acquiring the buffer size range indicated by the BSR reported to the base station by the user equipment at the previous time, the data size needed to be sent by the user equipment when the user equipment reported the BSR at the previous time is determined. Meanwhile, statistics on the uplink resource size allocated by the base station to the user equipment from a previous time when the user equipment reported the BSR to the base station to the current time is performed. Then it is judged whether or not to trigger the user terminal to report the BSR to the base station at the current time according to the data size and the uplink resource size, and thereby achieves real-time judging a triggering condition of the user equipment reporting the BSR to the base station.

The actual buffer size of the uplink buffer of the user equipment when the user terminal reported the BSR to the base station at the previous time is used as the data size to be sent by the user equipment, such that the method for calculating the data size to be sent by a user equipment is precise, and the judgment precision of the triggering condition of the user equipment reporting the BSR to the base station is improved.

The data size to be sent by the user equipment is determined when the user equipment reported the BSR at the previous time. Meanwhile, statistics on the uplink resource size allocated by the base station to the user equipment from a time when the user equipment reported the BSR to the base station at the previous time to the current time is performed. Then it is judged whether or not to trigger the user terminal to report the BSR to the base station at the current time according to the data size and the uplink resource size, and thereby achieves real-time judging a triggering condition of the user equipment reporting the BSR to the base station.

It is to be understood that both the foregoing general description and the following detailed description are illustrative and explanatory only and are not restrictive of the present disclosure.

**BRIEF DESCRIPTION OF THE DRAWINGS**

The accompanying drawings, which are incorporated in and constitute a part of this specification, illustrate aspects consistent with the present disclosure and, together with the description, serve to explain the principles of the present disclosure.

Fig. 1 is a flow chart of an exemplary first aspect of the present disclosure of a method for triggering reporting a buffer status report BSR;
Fig. 2 is a flow chart of an exemplary second aspect of the present disclosure of a method for triggering reporting a buffer status report BSR;
Fig. 3 is a flow chart of an exemplary third aspect of the present disclosure of a method for triggering reporting a buffer status report BSR;
Fig. 4 is a block diagram of an exemplary first aspect of the present disclosure of an apparatus for triggering reporting a buffer status report BSR;
Fig. 5 is a block diagram of a user equipment according to an exemplary aspect of the present disclosure; and
Fig. 6 is another block diagram of a user equipment according to an exemplary aspect of the present disclosure.

The specific aspects of the present disclosure, which have been illustrated by the accompanying drawings described above, will be described in detail below. These accompanying drawings and description are not intended to limit the scope of the present disclosure in any manner, but to explain the concept of the present disclosure to those skilled in the art via referencing specific aspects.

**DETAILED DESCRIPTION**

Reference will now be made in detail to exemplary aspects, examples of which are illustrated in the accompanying drawings. The following description refers to the accompanying drawings in which the same numbers in different drawings represent the same or similar elements unless otherwise represented. The implementations set forth in the following description of exemplary aspects do not represent all implementations consistent with the present disclosure. Instead, they are merely examples of apparatuses and methods consistent with aspects related to the present disclosure as recited in the appended claims.

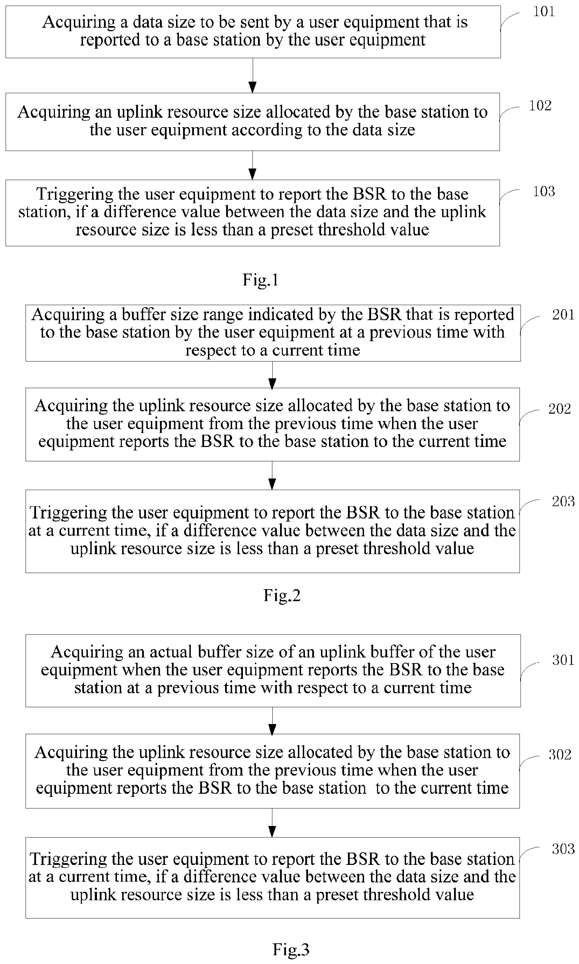

Fig. 1 is a flow chart of a first aspect of a method for triggering reporting a buffer status report BSR. The method may be performed by an apparatus for triggering reporting a buffer status report BSR. The apparatus for triggering reporting a buffer status report BSR may be integrated into a user equipment, as shown in Fig. 1. The method includes the following steps.

In step 101, a data size to be sent by a user equipment that is reported to a base station by the user equipment is acquired.

In the present aspect, a buffer status report (BSR) sent from a user equipment (UE) to an evolved Node B (Evolved Node B, eNodeB) is employed to represent how much data needs to be sent in an uplink buffer of the user equipment. Before the user equipment sends the BSR to the base station such as the eNodeB, the user equipment needs to perform statistics about how much data needs to be sent in the uplink buffer of the user equipment

In step 102, an uplink resource size allocated by the base station to the user equipment according to the data size is acquired.

After the base station, for example, the eNodeB receives the BSR sent from the user equipment, the base station allocates the uplink resource to the user equipment, so that the user equipment sends the uplink data to the eNodeB using the uplink resource.

In step 103, the user equipment is triggered to report the buffer status report BSR to the base station, if a difference value between the data size and the uplink resource size is less than a preset threshold value.

When the user equipment needs to send a large amount of data, after the user equipment sends the BSR to the base station once, a logical channel or logical channel group of the base station will continuously generate new data, and the user equipment also needs to ask for the uplink resource from the base station for the new data. In the aspect of the present disclosure, there is proposed a triggering condition that the user equipment sends the BSR to the base station again after sending the BSR to the base station once. Optionally, the triggering condition is that the data size to be sent by the user equipment is larger than the uplink resource size allocated by the base station to the user equipment and a difference value between the data size and the uplink resource size is less than a preset threshold value. Optionally, the data size to be sent by the user equipment is represented by $M$; optionally,

$M$ is nonzero, and the uplink resource allocated to the user equipment by the base station is represented by $X$, then the triggering condition may be expressed as formula (1):

$$M - X < threshold \quad (1)$$

wherein, *threshold* is a preset threshold value. When the formula (1) is satisfied, the user equipment is triggered to report the BSR to the base station.

In the present aspect, by comparing a data size needs to be sent by a user equipment and an uplink resource size allocated by the base station to the user equipment according to the data size, it is judged whether or not to trigger the user equipment to report the buffer status report BSR to the base station. Specifically, if the data size to be sent by the user equipment is larger than the uplink resource size allocated by the base station to the user equipment and a difference value between the data size and the uplink resource size is less than a preset threshold value, the user equipment is triggered to report the BSR to the base station. That is, when a large amount of data needs to be sent by the user equipment, it may be judged whether or not the user equipment is triggered to report the buffer status report BSR to the base station, based on the difference value between the data size to be sent by the user equipment and the uplink resource size allocated by the base station to the user equipment. Thus, the user equipment does not need to periodically send the BSR to an eNodeB, which avoids a problem of large network overhead caused by the small period, and meanwhile avoids a problem of large delay of the uplink data due to the large period.

Fig. 2 is a flow chart of a second aspect of a method for triggering reporting a buffer status report BSR. As shown in Fig. 2, the method may include following steps.

In step 201, a buffer size range indicated by the BSR reported to the base station by the user equipment at a previous time with respect to a current time is acquired.

In the present aspect, the data size to be sent by the user equipment is a minimum value or a maximum value of the buffer size range.

In the present aspect, optionally, the user equipment has reported the BSR to the base station once at a historical time t1, and the user equipment did not report the BSR to the base station from the historical time t1 to a current time t2, and then the historical time t1 may be taken as a time at which the user terminal reports the BSR most recently.

In other aspects, at the historical time t1, the manner of triggering the user equipment to transmit the BSR to the base station may be performed by a signal from a processor to a transmitter of the user equipment, or by any other way that triggers the transmission of the BSR.

The BSR reported by the user equipment to the base station includes a logical channel group identification field and a buffer size field, wherein the logical channel group identification field is used to indicate identification information of the logical channel group corresponding to the BSR reported to the base station by the user equipment, and the buffer size field is used to indicate the buffer size range which may be used to approximately represent the uplink data size of the user equipment.

In the present aspect, the BSR reported to the base station by the user equipment at the historical time t1 is acquired. The buffer size range indicated by the buffer size field is acquired from the BSR. A minimum value or a maximum value corresponding to the buffer size range is taken as the data size to be sent by the user equipment at the historical time t1. That is, the minimum value or the maximum value corresponding to the buffer size range is taken as $M$ in the above aspect. Optionally, $M$ is nonzero.

In step 202, it is acquired that the uplink resource size allocated by the base station to the user equipment from a time when the user equipment reports the BSR to the base station at the previous time with respect to the current time.

Since the user equipment did not report the BSR to the base station from the historical time t1 to the current time t2, the base station will allocate the uplink resource for the user equipment after the historical time t1 at which the user equipment sends the BSR to the base station. In other aspects, the base station may allocate uplink resource to the user equipment a plurality of times from the historical time t1 and to current time t2. In the present aspect, statistics on the uplink resource size allocated by the base station to the user equipment from the historical time t1 to the current time t2 is performed. Optionally, an uplink resource size allocated by the base station to the user equipment from the historical time t1 to the current time t2 is taken as $X$ in the above aspect.

In step 203, if a difference value between the data size and the uplink resource size is less than a preset threshold value, the user equipment is triggered to report the buffer status report BSR to the base station at a current time.

In the present aspect, optionally, it is judged whether or not the user equipment satisfies the triggering condition, i.e., the formula (1) described in the above aspect at the current time t2. If it satisfies, the user equipment is triggered to report the buffer status report BSR to the base station at the current time t2.

In the present aspect, by acquiring the buffer size range indicated by the BSR reported to the base station by the user equipment at the previous time, the data size needed to be sent by the user equipment when the user equipment reported the BSR at the previous time is determined. Meanwhile, statistics on the uplink resource size allocated by the base station to the user equipment from a time when the user equipment reported the BSR to the base station at the previous time to the current time is performed. Then it is judged whether or not to trigger the user terminal to report the BSR to the base station at the current time according to the data size and the uplink resource size, and thereby achieves real-time judging a triggering condition of the user equipment reporting the BSR to the base station.

Fig. 3 is a flow chart of a third aspect of a method for triggering reporting a buffer status report BSR. As shown in Fig. 3, the method may include following steps.

In step 301, it is acquired an actual buffer size of an uplink buffer of the user equipment when the user equipment reports the BSR to the base station at a previous time with respect to a current time.

On the basis of the above aspect, optionally, the user equipment has reported the BSR to the base station once at a historical time t1, and the user equipment did not report the BSR to the base station from the historical time t1 to a current time t2, and then the historical time t1 may be taken as a time at which the user terminal reports the BSR most recently.

In the present aspect, optionally, the actual buffer size of an uplink buffer of the user equipment at the historical time t1 is taken as the data size to be sent by the user equipment at the historical time t1. That is, the actual buffer size of the uplink buffer of the user equipment at the historical time t1 is taken as $M$ in the above aspect. Optionally, $M$ is nonzero.

In step 302, it is acquired an uplink resource size allocated by the base station to the user equipment between a previous time when the user equipment reported the BSR to the base station and the current time.

Since the user equipment did not report the BSR to the base station from the historical time t1 to the current time t2, the base station will allocate the uplink resource for the user equipment after the historical time t1 at which the user equipment sent the BSR to the base station. In other aspects, the base station may allocate the uplink resource to the user equipment a plurality of times from the historical time t1 and the current time t2. In the present aspect, statistics on the uplink resource size allocated by the base station to the user equipment from the historical time t1 to the current time t2 is performed. Optionally, an uplink resource size allocated by the base station to the user equipment from the historical time t1 to the current time t2 is taken as $X$ in the above aspect.

In step 303, if a difference value between the data size and the uplink resource size is less than a preset threshold value, the user equipment is triggered to report the buffer status report BSR to the base station at a current time.

In the present aspect, optionally, it is judged whether or not the user equipment satisfies the triggering condition, i.e., the formula (1) described in the above aspect at the current time t2. If it satisfies, the user equipment is triggered to report the buffer status report BSR to the base station at the current time t2.

In the present aspect, the preset threshold value *threshold* in the formula (1) is determined according to a different logical channel of the user equipment, or the preset threshold value is determined according to a different logical channel group of the user equipment, or the preset threshold value is determined according to all logical channels of the user equipment. Optionally, statistics on the data size to be sent by the user equipment, i.e., the data size *M* to be sent in the uplink buffer of the user equipment, may be performed in units of logical channels, or in units of logical channel groups, or in units of all logical channels of the user equipment. Correspondingly, when statistics on the data size *M* to be sent is performed by the user equipment in units of logical channels, different logical channels correspond to different *threshold.* When statistics on the data size *M* to be sent is performed by the user equipment in units of logical channel groups, different logical channel groups correspond to different *threshold.* When statistics on the data size *M* to be sent is performed by the user equipment in units of all logical channels, all logical channel groups or all logical channels share one *threshold.*

In the present aspect, the actual buffer size of the uplink buffer of the user equipment when the user terminal reports the BSR to the base station at the previous time is used as the data size to be sent by the user equipment such that the method for calculating the data size to be sent by a user equipment is precise, and the judgment precision of the triggering condition of the user equipment reporting the BSR to the base station is improved.

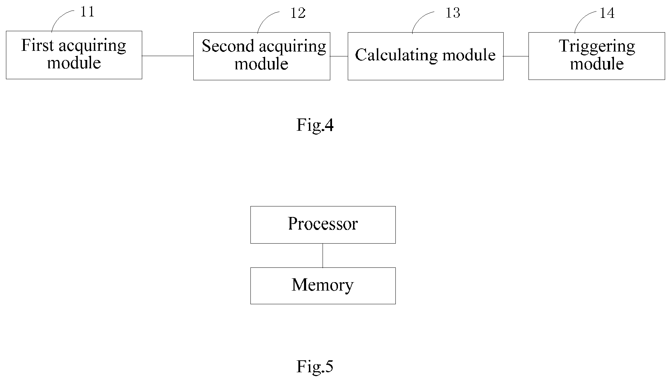

Fig. 4 is a block diagram of a first aspect of an apparatus for triggering reporting a buffer status report BSR. As shown in Fig. 4, the apparatus includes a first acquiring module 11, a second acquiring module 12, a calculating module 13 and a triggering module 14.

The first acquiring module 11 is configured to acquire a data size to be sent by a user equipment reported to a base station by the user equipment.

The second acquiring module 12 is configured to acquire an uplink resource size allocated by the base station to the user equipment according to the data size.

The calculating module 13 is configured to calculate a difference value between the data size and the uplink resource size.

The triggering module 14 is configured to trigger the user equipment to report the buffer status report BSR to the base station when the difference value between the data size and the uplink resource size is less than a preset threshold value.

The apparatus for triggering reporting a buffer status report BSR provided by the present aspect may be used to perform the technical solution of the method aspect shown in Fig. 1.

In the present aspect, by comparing a data size needs to be sent by a user equipment and an uplink resource size allocated by the base station to the user equipment according to the data size, it is judged whether or not to trigger the user equipment to report the buffer status report BSR to the base station. Specifically, if the data size to be sent by the user equipment is larger than the uplink resource size allocated by the base station to the user equipment and a difference value between the data size and the uplink resource size is less than a preset threshold value, the user equipment is triggered to report the BSR to the base station. That is, when a large amount of data needs to be sent by the user equipment, it may be judged whether or not the user equipment is triggered to report the buffer status report BSR to the base station, based on the difference value between the data size to be sent by the user equipment and the uplink resource size allocated by the base station to the user equipment. Thus, the user equipment does not need to periodically send the BSR to an eNodeB, which avoids the problem of large network overhead caused by the small period, and meanwhile avoids a problem of large delay of the uplink data due to the large period.

On the basis of the aspect shown in Fig. 4, the first acquiring module 11 is configured to: acquire a buffer size range indicated by the BSR reported to the base station by the user equipment at a previous time with respect to a current time, the data size to be sent by the user equipment being a minimum value or a maximum value of the buffer size range.

Alternatively, the first acquiring module 11 is configured to: acquire an actual buffer size of an uplink buffer of the user equipment when the user equipment reports the BSR to the base station at a previous time with respect to a current time.

Optionally, the second acquiring module 12 is configured to: acquire the uplink resource size allocated by the base station to the user equipment from a previous time when the user equipment reports the BSR to the base station to the current time.

Correspondingly, the triggering module 14 is configured to: trigger the user equipment to report the buffer status report BSR to the base station at the current time.

In the present aspect, optionally, the preset threshold value is determined according to a different logical channel of the user equipment, or the preset threshold value is determined according to a different logical channel group of the user equipment, or the preset threshold value is determined according to all logical channels of the user equipment.

The apparatus for triggering reporting a buffer status report BSR provided by the present aspect may be used to perform the technical solution of the method aspect shown in Fig. 2 or Fig. 3.

In the present aspect, by acquiring the buffer size range indicated by the BSR reported to the base station by the user equipment at the previous time, the data size to be sent by the user equipment when the user equipment reports the BSR at the previous time is determined. Meanwhile, statistics on the uplink resource size allocated by the base station to the user equipment from a previous time when the user equipment reports the BSR to the base station to the current time is performed. Then it is judged whether or not to trigger the user terminal to report the BSR to the base station at the current time according to the data size and the uplink resource size, and thereby achieves real-time judging a triggering condition of the user equipment reporting the BSR to the base station. The actual buffer size of the uplink buffer of the user equipment when the user terminal reports the BSR to the base station at the previous time is used as the data size to be sent by the user equipment so that the method for calculating the data size to be sent by a user equipment is precise, and the judgment precision of the triggering condition of the user equipment reporting the BSR to the base station is improved.

With regard to the apparatus for triggering reporting a buffer status report BSR in the foregoing aspects, detailed description of specific modes for conducting operation of modules and sub-modules has been made in the aspects related to the method, and no detailed illustration will be made here.

The internal functions and structure of the apparatus for triggering reporting a buffer status report BSR have been described above, as shown in Fig. 5. In practice, the apparatus for triggering reporting a buffer status report BSR may be implemented as a user equipment, including:

a processor; and
a memory for storing instructions executable by the processor,
wherein the processor is configured to perform the following operations:
acquiring a data size to be sent by a user equipment that is reported to a base station by the user equipment;
acquiring an uplink resource size allocated by the base station to the user equipment according to the data size; and
triggering the user equipment to report the buffer status report BSR to the base station, if a difference value between the data size and the uplink resource size is less than a preset threshold value.

In the present aspect, by comparing a data size to be sent by a user equipment and an uplink resource size allocated by the base station to the user equipment according to the data size, it is judged whether or not to trigger the user equipment to report the buffer status report BSR to the base station. Specifically, if the data size to be sent by the user equipment is larger than the uplink resource size allocated by the base station to the user equipment and a difference value between the data size and the uplink resource size is less than a preset threshold value, the user equipment is triggered to report the BSR to the base station. That is, when a large amount of data needs to be sent by the user equipment, it may be judged whether or not the user equipment is triggered to report the buffer status report BSR to the base station, based on the difference value between the data size to be sent by the user equipment and the uplink resource size allocated by the base station to the user equipment. Thus, the user equipment does not need to periodically send the BSR to an eNodeB, and thereby avoids the problem of large network overhead caused by the small period, and meanwhile avoids a problem of large delay of the uplink data due to the large period.

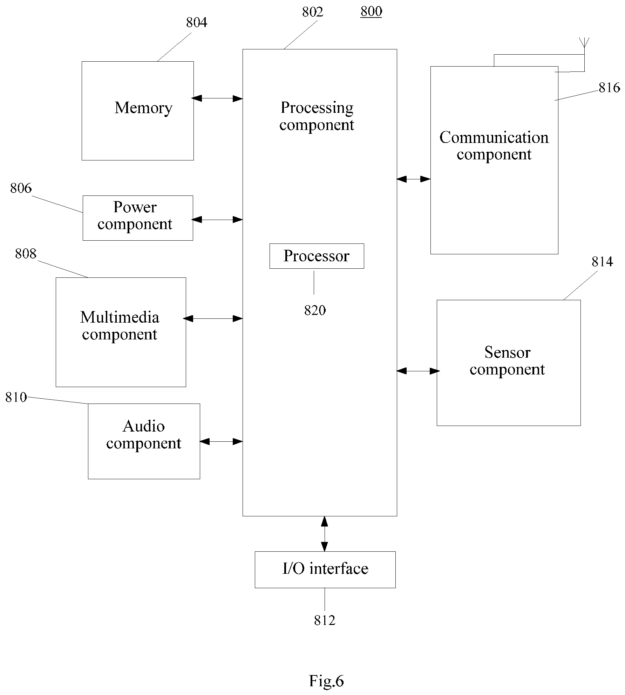

Fig. 6 is another block diagram of a user equipment according to an exemplary aspect. For example, the user equipment 800 may be a mobile phone, a computer, a digital broadcast terminal, a messaging device, a gaming console, a tablet, a medical device, exercise equipment, a personal digital assistant, and the like.

Referring to Fig. 6, the user equipment 800 may include one or more of the following components: a processing component 802, a memory 804, a power component 806, a multimedia component 808, an audio component 810, an input/output (I/O) interface 812, a sensor component 814, and a communication component 816.

The processing component 802 typically controls overall operations of the user equipment 800, such as the operations associated with display, telephone calls, data communications, camera operations, and recording operations. The processing component 802 may include one or more processors 820 to execute instructions to perform all or part of the steps in the above described methods. Moreover, the processing component 802 may include one or more modules which facilitate the interaction between the processing component 802 and other components. For example, the processing component 802 may include a multimedia module to facilitate the interaction between the multimedia component 808 and the processing component 802.

The memory 804 is configured to store various types of data to support the operations of the user equipment 800. Examples of such data include instructions for any applications or methods operated on the user equipment 800, contact data, phonebook data, messages, pictures, video, etc. The memory 804 may be implemented by using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 806 provides power for various components of the user equipment 800. The power component 806 may include a power management system, one or more power sources, and any other components associated with the generation, management, and distribution of power in the user equipment 800.

The multimedia component 808 includes a screen providing an output interface between the user equipment 800 and the user. In aspects, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In aspects, the multimedia component 808 includes a front camera and/or a rear camera. The front camera and the rear camera may receive an external multimedia data while the user equipment 800 is in an operation mode, such as a photographing mode or a video mode. Each of the front camera and the rear camera may be a fixed optical lens system or have focus and optical zoom capability.

The audio component 810 is configured to output and/or input audio signals. For example, the audio component 810 includes a microphone ("MIC") configured to receive an external audio signal when the user equipment 800 is in an operation mode, such as a call mode, a recording mode, and a voice recognition mode. The received audio signal may be further stored in the memory 804 or sent via the communication component 816. In the aspects, the audio component 810 further includes a speaker for outputting audio signals.

The I/O interface 812 provides an interface between the processing component 802 and peripheral interface modules, such as a keyboard, a click wheel, buttons, and the like. The buttons may include, but are not limited to, a home button, a volume button, a starting button, and a locking button.

The sensor component 814 includes one or more sensors for providing state assessments of various aspects of the user equipment 800. For instance, the sensor component 814 may detect an open/closed state of the user equipment 800, relative positioning of components, of the user equipment 800 (e.g., the display and the keypad), a change in position of the user equipment 800 or a component of the user equipment 800, a presence or absence of user contact with the user equipment 800, an orientation or an acceleration/deceleration of the user equipment 800, and a change in temperature of the user equipment 800. The sensor component 814 may include a proximity sensor configured to detect the presence of nearby objects without any physical contact. The sensor component 814 may further include a light sensor, such as a CMOS or CCD image sensor, for use in imaging applications. In aspects, the sensor component 814 may further include an accelerometer sensor, a gyroscope sensor, a magnetic sensor, a pressure sensor or a temperature sensor.

The communication component 816 is configured to facilitate communication, wired or wirelessly, between the user equipment 800 and other devices. The user equipment 800 may access a wireless network based on a communication standard, such as WiFi, 2G, or 3G, or a combination thereof. In one exemplary aspect, the communication component 816 receives a broadcast signal or broadcast associated information from an external broadcast management system via a broadcast channel. In one exemplary aspect, the communication component 816 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary aspects, the user equipment 800 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described method.

In exemplary aspects, there is further provided a non-transitory computer-readable storage medium including instructions, such as included in the memory 804, executable by the processor 820 in the user equipment 800, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when instructions in the storage medium are executed by a processor of a mobile terminal, the mobile terminal is enabled to perform a method for triggering reporting a buffer status report BSR, wherein the method includes:

acquiring a data size to be sent by a user equipment that is reported to a base station by the user equipment;

acquiring an uplink resource size allocated by the base station to the user equipment according to the data size; and

triggering the user equipment to report the buffer status report BSR to the base station, if a difference value between the data size and the uplink resource size is less than a preset threshold value.

It is noted that the various modules, sub-modules, units, and components in the present disclosure can be implemented using any suitable technology. For example, a module may be implemented using circuitry, such as an integrated circuit (IC). As another example, a module may be implemented as a processing circuit executing software instructions.

Other aspects of the disclosure may be apparent to those skilled in the art from consideration of the specification and practice of the disclosure disclosed here. This application is intended to cover any variations, uses, or adoptions of the disclosure following the general principles thereof and including such departures from the present disclosure as come within known or customary practice in the art. It is intended that the specification and examples be considered as exemplary only, with a true scope and spirit of the disclosure being indicated by the following claims.

It will be appreciated that the present disclosure is not limited to the exact construction that has been described above and illustrated in the accompanying drawings, and that various modifications and changes can be made without departing from the scope thereof. It is intended that the scope of the present disclosure only be limited by the appended claims.

**Claims**

1. A method for triggering a buffer status report (BSR), the method comprising:

   determining (101), by a user equipment (800), a data size of a transmission to be sent by the user equipment (800) to a base station;
   reporting the data size to the base station;
   receiving (102) an allocation of an uplink resource size that is allocated by the base station to the user equipment (800) based on the data size;
   determining a difference value between the data size and the uplink resource size; and
   transmitting (103) the BSR to the base station when the difference value between the data size and the uplink resource size is less than a preset threshold value.

2. The method according to claim 1, wherein determining (101) the data size of the transmission includes Acquiring (201) a buffer size range indicated by a previous BSR that is transmitted to the base station by the user equipment (800) at a previous time with respect to a current time, and using as the data size to be sent by the user equipment (800) the minimum value or a maximum value of the buffer size range.

3. The method according to claim 1 or 2, wherein determining (101) the data size of the transmission includes acquiring an actual buffer size of an uplink buffer of the user equipment (800) at a previous time when the user equipment (800) reported a previous BSR to the base station with respect to a current time.

4. The method according to any one of claims 1-3, wherein receiving (102) the allocation of the uplink resource size includes acquiring (202) an uplink resource size between the previous time when the user equipment (800) reported the previous BSR to the base station and the current time.

5. The method according to any one of claims 1-4, wherein the user equipment (800) is triggered to transmit the BSR to the base station at the current time.

6. The method according to claim 1, wherein the preset threshold value is determined based on one of a different logical channel of the user equipment (800), a different logical channel group of the user equipment (800), and all logical channels of the user equipment (800).

7. A user equipment (800), comprising:

   a processor (802); and
   a memory (804) for storing instructions executable by the processor (802),
   wherein the processor (802) is configured to:

      determine a data size of a transmission to be sent by the user equipment (800) to a base station;
      report the data size to the base station;
      receive an allocation of an uplink resource size that is allocated by the base station to the user equipment (800) based on the data size;
      determine a difference value between the data size and the uplink resource size; and
      transmit a buffer status report (BSR) to the base station when the difference value between the data size and the uplink resource size is less than a preset threshold value.

8. The user equipment (800) according to claim 7, wherein the processor (802) is further configured to:

   acquire a buffer size range indicated by a previous BSR that is reported to the base station by the user equipment (800) at a previous time with respect to a current time, the data size to be sent by the user equipment (800) being a minimum value or a maximum value of the buffer size range.

9. The user equipment (800) according to claim 7 or 8, wherein the processor (802) is further configured to:

   acquire an actual buffer size of an uplink buffer of the user equipment (800) at a previous time when the user equipment (800) reported a previous BSR to the base station with respect to a current time.

10. The user equipment (800) according to any one of claims 7-9, wherein the processor (802) is further configured to:

    acquire the uplink resource size from the previous time when the user equipment (800) reported the previous BSR to the base station to the current time.

**11.** The user equipment (800) according to any one of claims 7-10, wherein the processor (802) is further configured to:

trigger the user equipment (800) to transmit the BSR to the base station at the current time.

**12.** The user equipment (800) according to claim 9, wherein the preset threshold value is determined based on one of a different logical channel of the user equipment (800), a different logical channel group of the user equipment (800), and all logical channels of the user equipment (800).

**13.** A non-transitory computer-readable storage medium having stored therein instructions that, when executed by a processor (802) of a user equipment (800), cause the user equipment (800) to:

determine a data size of a transmission to be sent by the user equipment (800) to a base station;
report the data size to the base station;
receive an allocation of an uplink resource size that is allocated by the base station to the user equipment (800) based on the data size;
determine a difference value between the data size and the uplink resource size; and
transmit a buffer status report (BSR) to the base station when the difference value between the data size and the uplink resource size is less than a preset threshold value.

Acquiring a data size to be sent by a user equipment that is reported to a base station by the user equipment — 101

↓

Acquiring an uplink resource size allocated by the base station to the user equipment according to the data size — 102

↓

Triggering the user equipment to report the BSR to the base station, if a difference value between the data size and the uplink resource size is less than a preset threshold value — 103

Fig.1

Acquiring a buffer size range indicated by the BSR that is reported to the base station by the user equipment at a previous time with respect to a current time — 201

↓

Acquiring the uplink resource size allocated by the base station to the user equipment from the previous time when the user equipment reports the BSR to the base station to the current time — 202

↓

Triggering the user equipment to report the BSR to the base station at a current time, if a difference value between the data size and the uplink resource size is less than a preset threshold value — 203

Fig.2

Acquiring an actual buffer size of an uplink buffer of the user equipment when the user equipment reports the BSR to the base station at a previous time with respect to a current time — 301

↓

Acquiring the uplink resource size allocated by the base station to the user equipment from the previous time when the user equipment reports the BSR to the base station to the current time — 302

↓

Triggering the user equipment to report the BSR to the base station at a current time, if a difference value between the data size and the uplink resource size is less than a preset threshold value — 303

Fig.3

11

| First acquiring module |

12

| Second acquiring module |

13

| Calculating module |

14

| Triggering module |

Fig.4

| Processor |

| Memory |

Fig.5

Fig.6

Europäisches
Patentamt

European
Patent Office

Office européen
des brevets

# EUROPEAN SEARCH REPORT

Application Number

EP 18 15 0028

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/113086 A1 (WU CHUNLI [CN] ET AL) 30 April 2009 (2009-04-30) | 1,6,7,13 | INV. H04W72/12 |
| Y | * paragraphs [0040] - [0049] * <br> * figures 6,7(A),7(B),8(A),8(B),9 * | 2-5,8-12 | |
| X | EP 2 166 810 A2 (HTC CORP [TW]) 24 March 2010 (2010-03-24) | 1,7,13 | |
| A | * paragraphs [0010] - [0047] * | 2-6,8-12 | |
| Y | US 2014/133436 A1 (SHIIZAKI KOTARO [JP] ET AL) 15 May 2014 (2014-05-15) | 2-5,8-12 | |
| A | * paragraphs [0024] - [0066] * | 1,6,7,13 | |

TECHNICAL FIELDS
SEARCHED      (IPC)

H04W

The present search report has been drawn up for all claims

| Place of search | Date of completion of the search | Examiner |
|---|---|---|
| The Hague | 30 April 2018 | Papanikolaou, Eleni |

EPO FORM 1503 03.82 (P04C01)

## ANNEX TO THE EUROPEAN SEARCH REPORT
## ON EUROPEAN PATENT APPLICATION NO.

EP 18 15 0028

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2018

| Patent document cited in search report | | | Publication date | Patent family member(s) | | | Publication date |
|---|---|---|---|---|---|---|---|
| US 2009113086 | A1 | | 30-04-2009 | CN<br>TW<br>US | 101426270<br>200926860<br>2009113086 | A<br>A<br>A1 | 06-05-2009<br>16-06-2009<br>30-04-2009 |
| EP 2166810 | A2 | | 24-03-2010 | CN<br>CN<br>CN<br>EP<br>EP<br>EP<br>TW<br>US<br>US<br>US | 101686499<br>102665286<br>102711265<br>2166810<br>2364053<br>2389041<br>201014431<br>2010077100<br>2015223097<br>2015334681 | A<br>A<br>A<br>A2<br>A1<br>A1<br>A<br>A1<br>A1<br>A1 | 31-03-2010<br>12-09-2012<br>03-10-2012<br>24-03-2010<br>07-09-2011<br>23-11-2011<br>01-04-2010<br>25-03-2010<br>06-08-2015<br>19-11-2015 |
| US 2014133436 | A1 | | 15-05-2014 | JP<br>JP<br>US<br>WO | 5626476<br>WO2013024529<br>2014133436<br>2013024529 | B2<br>A1<br>A1<br>A1 | 19-11-2014<br>05-03-2015<br>15-05-2014<br>21-02-2013 |

EPO FORM P0459

For more details about this annex : see Official Journal of the European Patent Office, No. 12/82